# EUROPEAN PATENT APPLICATION

(11) **EP 2 194 206 A2**
(43) Date of publication of application: **09.06.2010**
(21) Application number: 09176314.4
(22) Date of filing: 18.11.2009
(51) Int. Cl.: E04F 11/025, E04F 11/112

(54) **Method and system for coupling a stair platform to a tower of a wind energy turbine**

(30) Priority: 02.12.2008 US 326382
(71) Applicant: General Electric Company, Schenectady, NY 12345 (US)
(72) Inventor: Gurk, Mathias, 48545, Tecklenburg, NWR (DE); Luehn, Holger, 49835, Wietmarschen, Niedersachsen (DE); Faust, Wolfgang, 48529, Niedersachsen (DE)
(74) Representative: Bedford, Grant Richard

(57) **Abstract**

A system for coupling a stair platform (204) to a tower of a wind energy turbine is provided. The system includes a doorway (200) formed in a portion of the tower (102), the doorway including a casing (202) defining an outer perimeter of the doorway, a stair platform comprising at least one side member (208), at least one connection member (300) extending outward from the casing, and at least one attachment slot (304) defined in the at least one side member, the at least one attachment slot configured to receive a portion of the at least one connection member therein to couple the stair platform to the doorway.

## Description

The field of the present invention relates generally to towers used with wind turbines, and more specifically to a method and system for attaching a stair platform to wind turbine towers.

Modem high performance wind energy turbines often include a tubular tower that includes diverse operating components that are located within of the tower and/or at the bottom thereof. Such components or units may include a frequency converter, a transformer and/or a control system necessary to transmit electrical energy from the wind turbine to a power distribution grid. In at least some known towers, access to the components and units is possible via a tower door located in a wall of the tower. Entry through the tower door frequently requires the use of a ladder or stairway since the tower door is commonly located at a substantial height above the ground. As a result, in many turbines the ladder or stairway is commonly coupled to the surrounding tower structure that is adjacent to the tower door.

Assembling and mounting of such ladders or stairways may be a time-consuming, expensive and/or dangerous task. For example, with at least some turbines, a crane is used to place the stairway in a desired position adjacent to the tower door, wherein at least one installation technician, usually standing on a ladder or other platform, can connect the stairway to the tower structure. However, this assembly procedure requires substantial attention and effort to attach the stairway to the tower and to prevent injuries to the technician. In other known assembly methods, the stairway platforms are fabricated with various openings that permit the platform to be coupled using mechanical fasteners (e.g., bolting, riveting or welding). Such assembly methods still require substantial attention and effort to enable the stairway to be coupled to the tower. Moreover, such assembly methods may still be time-consuming due to difficulty in aligning the mechanical fasteners.

In one aspect according to the present invention a system for coupling a stair platform to a tower of a wind energy turbine is provided. The system includes a doorway formed in a portion of the tower and a stair platform including at least one side member. The doorway includes a casing defining an outer perimeter of the doorway and at least one connection member extending outward from the casing. At least one attachment slot defined in at least one side member of the stair platform. The at least one attachment slot configured to receive a portion of the at least one connection member therein to couple the stair platform to the doorway.

In another aspect, a method for assembling a tower for a wind energy turbine is provided. The method includes coupling at least one connection member to a casing defining a doorway formed in the tower. The method also includes forming at least one attachment slot in a portion of a stair platform to be coupled with the tower. The method further includes positioning the at least one attachment slot of the stair platform adjacent to the at least one connection member and inserting the at least one connection member within the at least one attachment slot to couple the stair platform to the doorway casing.

In a further aspect, a stair platform for use with a turbine tower is provided. The stair platform includes at least one side member forming a portion of a structural frame of the stair platform. The at least one side member includes a first end and a second end, such that the first end is configured to make contact a ground surface and the second end is configured to couple to the tower. The stair platform further includes at least one attachment slot defined in the second end of the at least one side member, the at least one attachment slot is configured to slideably receive a portion of the tower therein to couple the stair platform to the tower.

Various aspects and embodiments of the present invention will now be described in connection with the accompanying drawings, in which:
Figure 1 is a schematic view of an exemplary wind turbine;
Figure 2 is a partial perspective view of a lower portion of a wind turbine tower, including an attached stair platform that may be used with the turbine (shown in Figure 1);
Figure 3 is an enlarged perspective view of the stair platform and wind turbine tower connection shown in Figure 2 and taken along area 3;
Figure 4 is a side view of an exemplary stair platform attachment slot that may be used with the wind turbine tower shown in Figure 2;
Figure 5 is an enlarged side view of the stair platform attachment slot shown in Figure 4; and
Figure 6 is an enlarged side view of an alternative stair platform attachment slot that may be used with the wind turbine tower (shown in Figure 2).

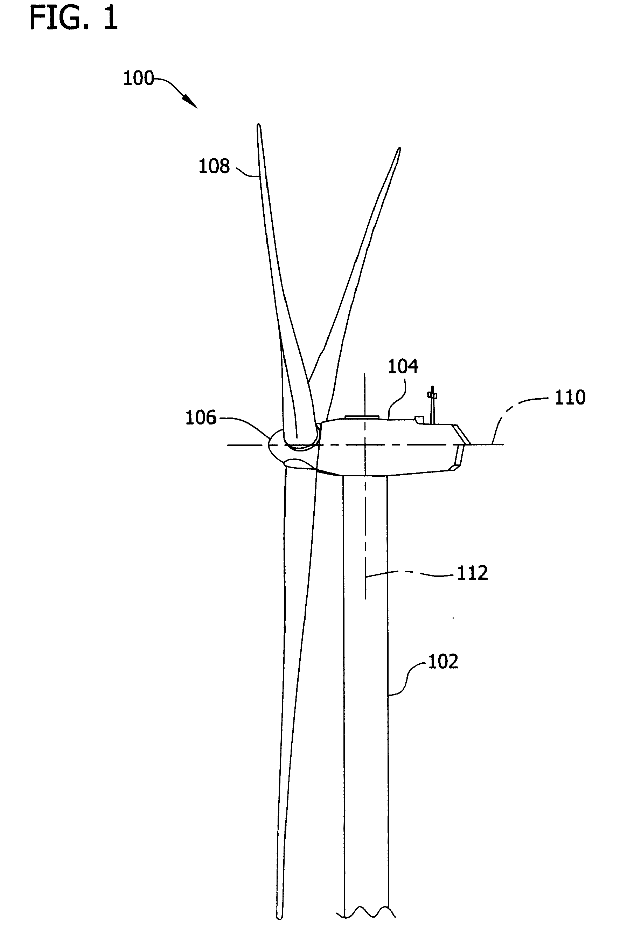

Figure 1 illustrates an exemplary horizontal axis wind turbine generator 100 having a tower 102 extending from a supporting surface (not shown), a nacelle 104 mounted on the tower 102, and a rotor 106 coupled to the nacelle 104. The rotor 106 includes a plurality of rotor blades 108 mounted thereto. In the exemplary embodiment, the rotor 106 has three rotor blades 108, but it is understood that the rotor 106 may include more or less than three rotor blades 108. The tower 102, which in the exemplary embodiment is tubular encloses various structures and equipment therein. It is contemplated that other types of wind turbine generators (e.g., vertical axis wind turbine generators) can be used without departing from the scope of this invention.

The rotor blades 108 are spaced about the rotor 106 to facilitate rotating the rotor 106 to transfer kinetic energy from the wind into usable mechanical energy, and subsequently, electrical energy. More specifically, as the wind strikes the blades 108, the rotor 106 is rotated about its rotational axis 110. Preferably, the blades 108 are positioned such that they face into the wind. Since the wind direction readily changes, the blades 108, and thereby the nacelle 104, need to be able to rotate with respect to the tower 102 so that the blades can remain substantially facing into the wind. That is, by rotating the nacelle 104, the blades can be rotated such that the wind direction is generally parallel to the rotor rotational axis 110 to maximize the amount of wind striking the blades. As such, the nacelle 104 and blades 108 can rotate with respect to the tower 102 about a rotational axis 112 that is generally transverse to the rotor rotational axis 110 and that is substantially coaxial with a longitudinal axis of the tower 102.

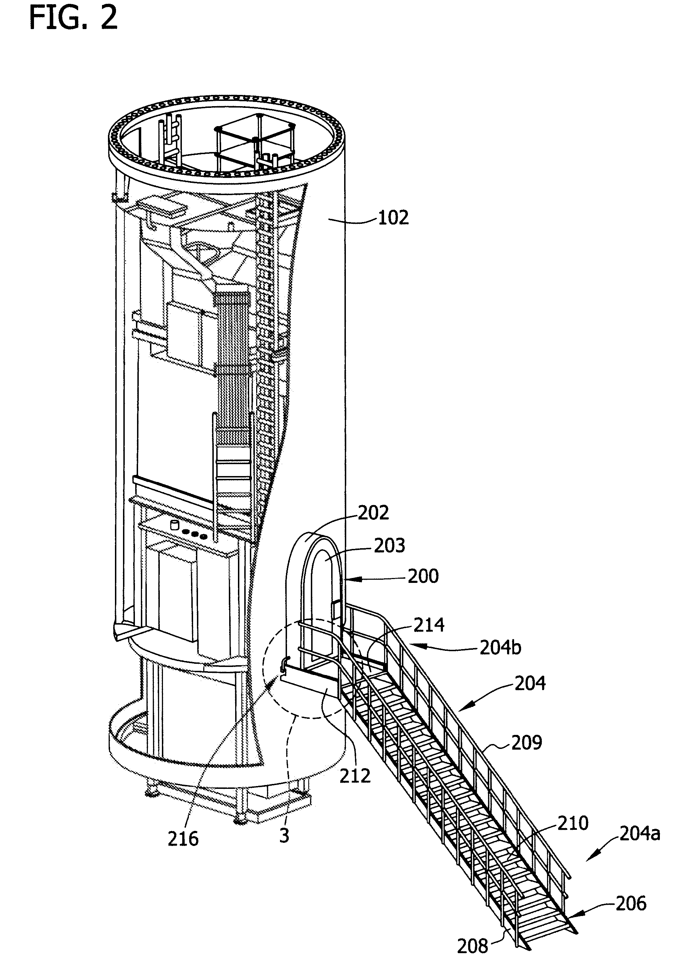

Figure 2 illustrates an exemplary stairway or stair platform 204 that may be used with tower 102. In the exemplary embodiment, stair platform 204 generally has a first end 204a that contacts a ground surface and a second end 204b that is coupled against a portion of tower 102. Tower 102 includes a doorway 200 formed therein that provides access to an interior portion of tower 102. Doorway 200 is defined by a door jamb, portal, or casing 202 that circumscribes the doorway 200 and defines an outer perimeter that provides structural support between the tower 102 and a door 203 hingedly coupled thereon. In the exemplary embodiment, platform 204 includes a structural frame 206 that includes two opposing side members 208 and two opposing hand rails 209 that are spaced apart by a plurality of steps 210. In one embodiment, diagonal side members 208 are formed from steel beams. However, one of ordinary skill in the art would readily appreciate that other suitable materials may be used to fabricate platform 204. In one exemplary embodiment, horizontal side members 212 that are spaced apart by platform 214, extend from side members 208. Horizontal side members 212 each include a coupler 216 that facilitates coupling platform 204 to tower 102.

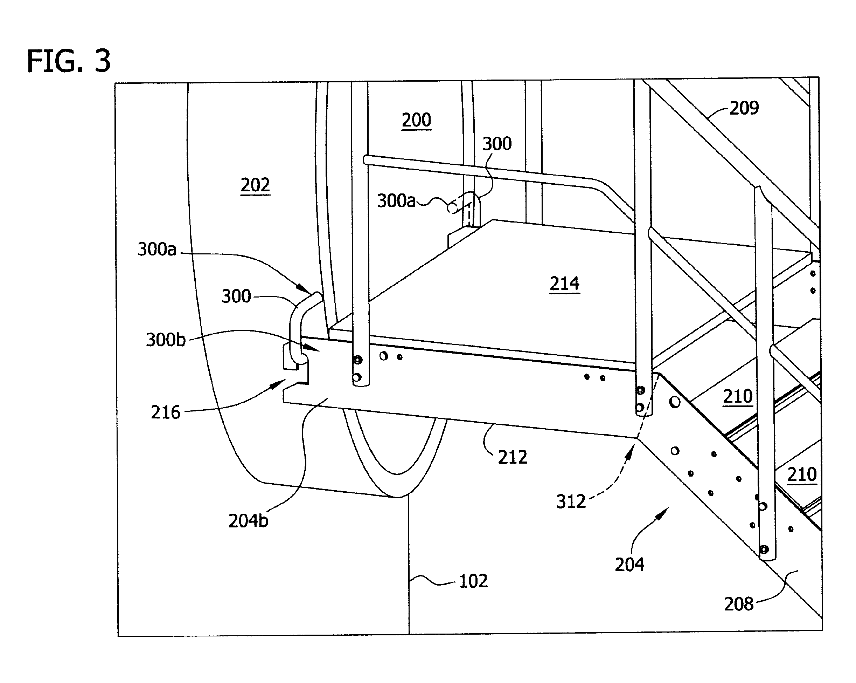

Figure 3 is an enlarged perspective view of stair platform 204 and coupler 216. In the exemplary embodiment, at least one connection member 300 is coupled to doorway casing 202. Connection member 300 may be coupled to casing 202 by welding, bolting, riveting, press fitting, and via any other structural connection known by those of ordinary skill in the art. Connection member 300 provides a bearing load path between stair platform 204 and tower 102, and also provides coupling between stair platform 204 and the tower 102. In the exemplary embodiment, connection member 300 is a "C" shaped bar that is coupled to casing 202. Bar 300 may extend around a portion of side member 208. It is contemplated that connection member 300 may also be configured as a single protrusion that extends outwardly from casing 202 to provide a structural member for coupling with platform 204.

Additionally, in this exemplary embodiment, side member 208 and horizontal side member 212 are formed unitarily together. Moreover side member 208 and horizontal side member 212 may be fabricated from materials that prohibit or resist oxidation, rust, or other material decomposition. Such materials may include alloys, aluminium, polymers, resins or combinations thereof. However, one of ordinary skill in the art should appreciate that members 208 and 212 may be fabricated separately and coupled together (e.g., welded together) at a seam 302 as required by particular installation requirements. In the exemplary embodiment, second end 204b is formed an attachment slot 304 that is sized and oriented to receive connection member 300 therein.

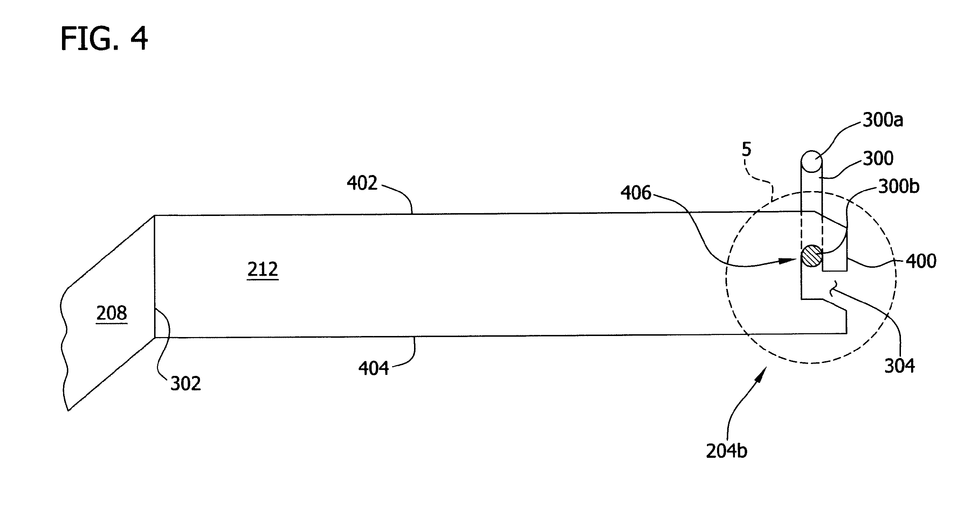

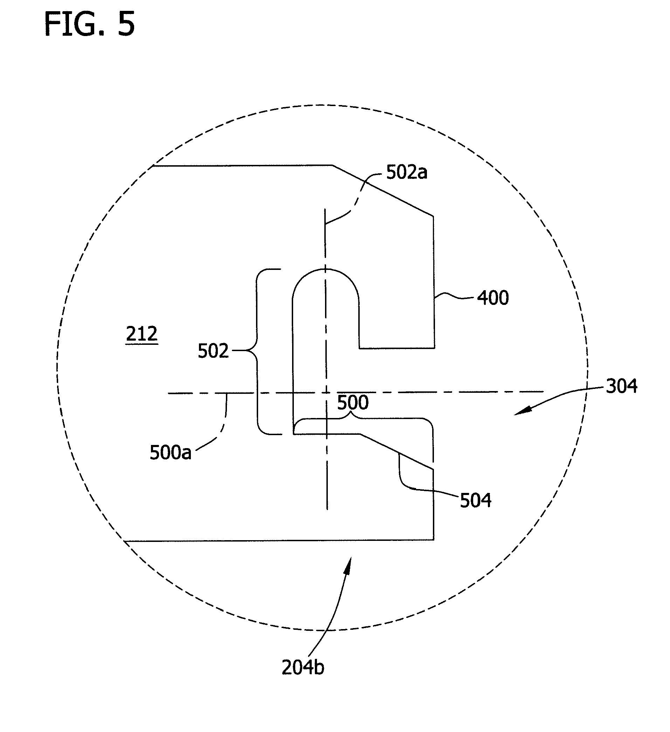

Figures 4 and 5 illustrate an exemplary stair platform attachment slot 304. In the exemplary embodiment, horizontal side member 212 includes a front edge 400, a top edge 402, and a bottom edge 404, and attachment slot 304 is primarily defined in front edge 400. However, in other embodiments, attachment slot 304 may be defined in front edge 400, top edge 402, bottom edge 404 and/or any combination of edges 400, 402, and 404 that enables attachment slot 304 to function as described herein.

In the exemplary embodiment, attachment slot 304 includes an alignment region 500 and a retention region 502 that are both sized and oriented to receive connection member 300 therein. Moreover, alignment region 500 is sized and oriented to receive connection member 300 therein and to facilitate guiding member 300 into retention region 502. Alignment region 500 may include one or more chamfered edges 504 to facilitate the installation process. Additionally, in the exemplary embodiment, retention region 502 extends away from alignment region 500 and is configured to be secured in place with respect to connection member 300. Once secured in position, stair platform 204 is positioned in an anchoring position 406, as shown in Figure 4, wherein anchoring position 406, connection member 300 is securely seated within the slot retention region 502 such that second end 204b cannot freely disengage connection member 300.

In another embodiment, alignment region 500 and retention region 502 may be coupled at various angles θ therebetween, as defined by respective centerlines 500a and 502a. As illustrated in Figure 5, centerlines 500a and 502a are generally perpendicular to each other. Alternatively, in other exemplary embodiments regions 500 and 502 may be oriented at any angel relative to each other.

In another embodiment, retention regions 502 is tapered. In such an embodiment, region 502 may be tapered to induce increased retention forces upon connection member 300, wherein the forces induced to member 300 may be proportional to the insertion depth of connection member 300 within retention region 502.

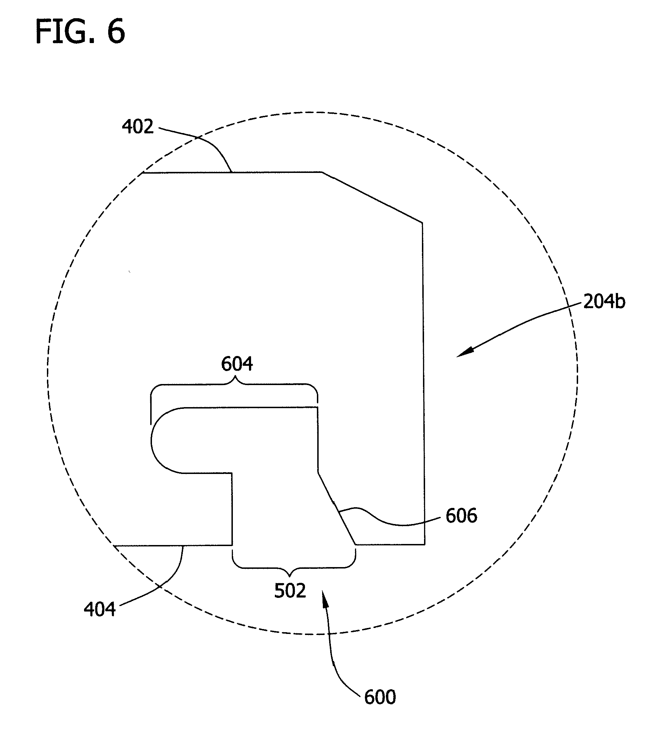

Figure 6 illustrates an enlarged side view of an alternate embodiment of a stair platform attachment slot 600 that may be used with a wind turbine tower. In the exemplary platform embodiment, attachment slot 600 is generally formed in a bottom edge 404 of second end 204b. Attachment slot 600 is similar to attachment slot 304 (shown in Figures 3-5) and identical components are identified with the same reference numerals. For example, attachment slot 600 includes alignment and retention regions 602 and 604, respectively, and a chamfered edge 606. However, in this embodiment, attachment slot 600 extends from bottom edge 404 generally towards a top edge 402.

In another embodiment, it is contemplated that each of the opposing side members 208 of stair platform 204 may include a coupler 216, and two opposing connection members 300 that are coupled to casing 202 in a position that enables engagement of platform attachment slots 304. Such an embodiment facilitates increasing structural support and anchoring of stair platform 204. Alternatively, in other embodiments, only one attachment slot 304 is used, such that the opposing side member 208 directly engages a corresponding support member 300. In such an embodiment, only one side member 208 would have an attachment slot 304 and the opposing side member would be permitted shift as necessary.

In an alternate embodiment, it is further contemplated that the method and system of coupling the stair platform 204 may be adapted and used to couple a stair, ladder, cabinet or other components to/or within the turbine tower.

During use, stair platform 204 is coupled to tower 102 via coupler 216 that includes at least one connection member 300 and at least one attachment slot 304 formed on platform second end 204b. Platform 204 is coupled to tower 102 by attaching connection member 300 to doorway casing 202 formed in tower 102. Stair platform 204 is then positioned such that attachment slot 304 is adjacent to connection member 300. Alignment region 500 then guides stair platform 204 into position such that connection member 300 is positioned within retention region 502. Once connection member 300 is fully inserted in retention region 502, stair platform 204 is securely anchored in position and securely coupled to tower 102.

The stair platforms provided herein are advantageous in that they include a connection member that may be fitted to a tower doorway prior to moving the stair platform into position, thus reducing risk of injury to the installation technician. By providing the connection member and then positioning the stair platform using the attachment slot, coupling the platform to the tower, during the installation process, a risk of injury is facilitated to be reduced. Moreover, the use of such stair platforms and couplers described herein, facilitates reducing the use conventional fasteners, such as nuts and bolts, rivets and welding to couple the stair platform to the tower, and as such, reduces installation time required to secure stair platforms during field installation.

Exemplary embodiments of a method and system for coupling a stair platform to a tower of a wind energy turbine are described above in detail. The method and system are not limited to the specific embodiments described herein, but rather, components of systems and/or steps of the methods may be utilized independently and separately from other components and/or steps described herein. For example, the method may also be used in combination with other coupling systems and methods, and are not limited to practice with only the coupling systems and methods as described herein. Rather, the exemplary embodiment can be implemented and utilized in connection with many other stair platform coupling applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for coupling a stair platform to a tower of a wind energy turbine, said system comprising:
   a doorway formed in a portion of said tower, said doorway comprising a casing defining an outer perimeter of said doorway;
   a stair platform comprising at least one side member;
   at least one connection member extending outward from said casing; and
   at least one attachment slot defined in said at least one side member, said at least one attachment slot configured to receive a portion of said at least one connection member therein to couple said stair platform to said doorway.
2. A system according to Clause 1 wherein said at least one attachment slot comprises an alignment region and a retention region extending from said alignment region.
3. A system according to any preceding Clause wherein said retention region is tapered to facilitate maintaining said at least one connection member within said at least one attachment slot.
4. A system according to any preceding Clause wherein said at least one connection member comprises at least one of a bolt, a rivet, a welded rod, and a press-fit pin.
5. A system according to any preceding Clause wherein said at least one connection member is configured to at least partially circumscribe a portion of said side member.
6. A system according to any preceding Clause wherein said alignment region comprises at least one chamfered edge to facilitate insertion of said at least one connection member within said at least one attachment slot.
7. A system according to any preceding Clause wherein said at least one attachment slot is defined on at least one of a front edge, a top edge, and a bottom edge of said side member.
8. A method for assembling a tower for a wind energy turbine, said method comprising:
   coupling at least one connection member to a casing defining a doorway formed in the tower;
   forming at least one attachment slot in a portion of a stair platform to be coupled with the tower;
   positioning the at least one attachment slot of the stair platform adjacent to the at least one connection member; and
   inserting the at least one connection member within the at least one attachment slot to couple the stair platform to the doorway casing.
9. A method according to Clause 8 wherein said forming the at least one attachment slot comprises forming an alignment region and a retention region extending from the alignment region.
10. A method according to Clause 8 or 9 wherein said forming the retention region comprises tapering the retention region to facilitate maintaining the at least one connection member within the at least one attachment slot.
11. A method according to any of Clauses 8 to 10 wherein said coupling at least one connection member further comprises welding the at least one connection member to the casing.
12. A method according to any of Clauses 8 to 11 wherein said coupling the at least one connection member comprises selecting at least one of a bolt, a rivet, a welded rod, and a press-fit pin.
13. A method according to any of Clauses 8 to 12 wherein said forming the alignment region comprises forming at least one chamfered edge to facilitate insertion of the at least one connection member within the at least one attachment slot.
14. A method according to any of Clauses 8 to 13 wherein said forming the at least one attachment slot comprises defining at least one of a front edge, a top edge, and a bottom edge within the portion of the stair platform.
15. A stair platform for use with a turbine tower, said stair platform comprising:
   at least one side member forming a portion of a structural frame of said stair platform, said at least one side member compring a first end and second end, said first end configured to contact a ground surface, said second end configured to couple to the tower; and
   at least one attachment slot defined in said second end of said at least one side member, said at least one attachment slot is configured to slidably receive a portion of the tower therein to couple said stair platform to the tower.
16. A platform according to Clause 15 wherein said at least one attachment slot comprises an alignment region and a retention region extending from said alignment region.
17. A platform according to Clause 15 or 16 wherein said retention region is tapered to facilitate maintaining at least one connection member within said attachment slot.
18. A platform according to any of Clauses 15 to 17 wherein said alignment region comprises at least one chamfered edge to facilitate insertion of the at least one connection member within said at least one attachment slot.
19. A platform according to any of Clauses 15 to 18 wherein said at least one attachment slot is defined on at least one of a front edge, a top edge, and a bottom edge of said second end of said side member.
20. A platform according to any of Clauses 15 to 19 wherein the at least one connection member is configured to at least partially circumscribe a portion of said second end of said side member.

## Claims

1. A system for coupling a stair platform (204) to a tower of a wind energy turbine, said system comprising:
a doorway (200) formed in a portion of said tower (102), said doorway comprising a casing (202) defining an outer perimeter of said doorway;
a stair platform comprising at least one side member (208);
at least one connection member (300) extending outward from said casing; and
at least one attachment slot (304) defined in said at least one side member, said at least one attachment slot configured to receive a portion of said at least one connection member therein to couple said stair platform to said doorway.

2. A system according to Claim 1 wherein said at least one attachment slot (304) comprises an alignment region (500,602) and a retention region (502,604) extending from said alignment region.

3. A system according to Claim 2 wherein said retention region (502,604) is tapered to facilitate maintaining said at least one connection member (300) within said at least one attachment slot (304,600).

4. A system according to any preceding Claim wherein said at least one connection member (300) comprises at least one of a bolt, a rivet, a welded rod, and a press-fit pin.

5. A system according to any preceding Claim wherein said at least one connection member (300) is configured to at least partially circumscribe a portion of said side member (208).

6. A system according to Claim 2 or any claim dependent thereon wherein said alignment region (500,602) comprises at least one chamfered edge (606) to facilitate insertion of said at least one connection member (300) within said at least one attachment slot (300).

7. A system according to any preceding Claim wherein said at least one attachment slot (304,600) is defined on at least one of a front edge (400), a top edge (402), and a bottom edge (404) of said side member (208).

8. A stair platform (204) for use with a turbine tower, said stair platform comprising:
at least one side member (208) forming a portion of a structural frame (206) of said stair platform, said at least one side member compring a first end and second end, said first end configured to contact a ground surface, said second end configured to couple to the tower (102); and
at least one attachment slot (304,600) defined in said second end of said at least one side member, said at least one attachment slot is configured to slidably receive a portion of the tower therein to couple said stair platform to the tower.

9. A platform (204) according to Claim 8 wherein said at least one attachment slot (304,600) comprises an alignment region (500,602) and a retention region (502,604) extending from said alignment region.

10. A platform (204) according to Claim 9 wherein said retention region (502,604) is tapered to facilitate maintaining at least one connection member (300) within said attachment slot (304,600).
